# EUROPEAN PATENT SPECIFICATION

(11) **EP 1 838 777 B1**
(45) Date of publication and mention of the grant of the patent: **05.01.2011**
(21) Application number: 05822661.4
(22) Date of filing: 28.11.2005
(51) Int. Cl.: C08L 3/02, C08J 3/05, C08J 3/12, C08J 3/215

(54) **DRY EMULSION, METHOD FOR PRODUCING THE SAME AND O/W EMULSION OBTAINED BY DISPERSION OF THE DRY EMULSION IN WATER**
TROCKENEMULSION, HERSTELLUNGSVERFAHREN DAFÜR UND DURCH DISPERGIEREN DER TROCKENEMULSION IN WASSER ERHALTENE O/W-EMULSION
EMULSION SECHE, SON PROCEDE DE PRODUCTION, ET EMULSION H/O OBTENUE PAR DISPERSION DE L'EMULSION SECHE DANS DE L'EAU

(30) Priority: 18.01.2005 GB 0500956
(43) Date of publication of application: 03.10.2007
(73) Proprietor: Unilever PLC, London EC4Y 0DY (GB); Unilever N.V., 3013 AL Rotterdam (NL)
(72) Inventor: BARRAZA, Harry Javier, Unilever R&D Port Sunlight, Wirral Merseyside CH63 3JW (GB)
(74) Representative: Elliott, Peter William
(86) International application number: PCT/EP2005/012871
(87) International publication number: WO 2006/076943

(56) References cited:
- WO-A-00/26280
- WO-A-95/28849
- US-A- 4 244 836
- GEJL-HANSEN F. ET AL.: "Microstructure of freeze dried emulsions: effect of emulsion composition" JOURNAL OF FOOD PROCESSING AND PRESERVATION, no. 2, 1978, pages 205-228, XP008063344 Wesport-Connecticut

## Description

### Technical Field

The present invention concerns improvements relating to emulsions, and in particular to dry emulsions which can be re-dispersed in water.

### Background of the Invention

Emulsions are often thermodynamically unstable. They exhibit all classical behaviours of metastable colloids including reversible as well as irreversible transitions that can lead to their destruction. Given that many applications in industry involve the use of emulsions, efforts have been dedicated to avoid or at least minimise the destabilising forces mentioned above.

Drying the emulsions is one of the alternatives available to extend their effective lifetime. For example in oil-in-water emulsions ('o/w' emulsions) the continuous water phase can be removed from the original emulsion by a suitable thermal and/or mechanical processes. Meanwhile, the other component of the emulsion, the dispersed oil phase, is usually encapsulated with a protecting shell or barrier that hampers their coalescence. The main requirement for a successful emulsion-drying operation is that the resulting material can be restored to the emulsified state on contact with water.

Spray drying is a known process for drying o/w emulsions, although other drying processes are also available. It is known to protect the oil droplets in a dried emulsion with a shell composed of a water-soluble material that becomes insoluble once the water removal starts. Some examples of such materials are gelatine, glycine, casein, maltodextrin, sucrose, and water-soluble polymers such as polyvinyl alcohol and polyvinyl pyrrolidone. Examples of such processes can be found in Frensch et al. US 4,244,836.

Although effective, the use of only water-soluble compounds as the sole component of the shell limits the encapsulation process. For instance, some of the materials mentioned above are heat-sensitive and become unstable at the temperatures usually encountered in spray drying (e.g. inlet temperatures of 250 - 280°C).

Some authors have recognised this drawback and suggested applications involving the addition of insoluble materials to help form a matrix that encapsulates the oil droplets during and after the drying stage. In most cases the insoluble, matrix-forming component was colloidal silica. Mixtures of soluble polymer (e.g., polyvinyl alcohol) and insoluble particulate material selected from clays (e.g., attapulgite, kaolin, and montmorillonite) or silicas (precipitated or fumed) are mentioned in WO 96/01048 as a way to reinforce the encapsulating wall.

In another example (WO 97/15617) high concentrations of a surfactant known to form a liquid crystal phase is used as a solid support in combination with a film-forming polymer.

These materials are part of a parent emulsion, which after drying produces a water-redispersible polymer composition.

In an article by GEJL-HANSEN F. ET AL. ("Microstructure of freeze dried emulsions: effect of emulsion composition", Journal of Food Processing and Preservation, no. 2, 1978, pages 205-228), a dry oil-in-water emulsion comprising starch granules (type and size not specified) and oil (linoleic acid, 20% on dry basis) is prepared by freeze-drying a fresh emulsion containing 20% of starch granules and 5% of linoleic acid.

### Brief Description of the Invention

We have determined that improved emulsions can be manufactured by using specific ranges of water, oil and a water insoluble amaranth starch polysaccharide.

Accordingly the present invention provides a dry emulsion comprising less than 20%wt water, at least 50%wt of a particulate, water-insoluble polysaccharide having a mean particle size of less than 3 microns and at least 30%wt of hydrophobic oil, wherein the polysaccharide is amaranth starch.

Typically, emulsions according to the invention comprise:
a) 5-15%wt water,
b) 50-60%wt amaranth starch polysaccharide,
c) 30-40%wt hydrophobic oil.

Preferably, the hydrophobic oil is selected from the group comprising, hydrocarbons, silicone oils, lipids, and mixtures thereof. More preferably, the hydrophobic oil comprises a mono- or di-ester of a polyol. Most preferably, the hydrophobic oil comprises a glyceride, an ester of a dimethicone copolyol, or a mixture thereof. Preferably, the hydrophobic oil comprises a perfume ingredient.

Oily components are of particular interest when the dried emulsion is incorporated in a washing, cleaning or laundering product, as many of the oily components discussed above have important functional properties in these classes of product.

It is advantageous that compositions according to the invention comprise a soluble binder. Preferably, the binder is selected from the group comprising a peptide, a sugar and mixtures thereof.

A preferred embodiment of the invention provides a dry emulsion, which comprises:
a) 5-15%wt water,
b) 50-60%wt of amaranth starch having a particle size less than 2 micron, and
c) 30-40%wt of a glyceride and/or an ester of a silicone polymer.

Preferred compositions are those which, at water contents of 9%wt, have no glass transition temperature between 100-150 Celsius, more preferably 100-180 Celsius.

The invention also provides a method for the manufacture of a dry emulsion, which comprises the steps of:
a) providing a dispersion of the insoluble polysaccharide in water,
b) forming an emulsion of said dispersion and the hydrophobic oil,
c) drying said emulsion to a water level of less than 20% water.

Preferably step (b) comprises use of a rotary mixer. A turbine-type impeller having a 2-4 cm rotor operating at 1200 to 1600 rpm is suitable for small scale manufacture.

Preferably the emulsion formed in step (b) comprises 0.5-2%wt of insoluble 'solids' (i.e. oil and polysaccharide). The preferred weight ratio of oil to polysaccharide in this parent emulsion is such that 40-50%wt of the total solids is oil and 50-60%wt is polysaccharide.

Preferably, step (c) comprises spray drying. Typical inlet temperatures for the spray head are 120 to 250 Celsius.

The drying step preferably reduces the water content of the feed emulsion from greater than 95% to less than 20%, preferably less than 15%wt and most preferably 12%wt or less.

In a further aspect, the invention provides an emulsion obtainable by dispersion of the dried emulsion described herein in water.

### Detailed Description of the Invention

Various preferred and/or optional features of the product and method aspects of the present invention are described in further detail below. As used elsewhere in the specification all percentages are percentages by weight unless the context demands otherwise.

Typically finished compositions, as well as the dried emulsion, will further comprise on or more of surfactant; builder, textile softener and/or conditioner and other optional components found in laundry compositions.

### Surfactants:

The surfactant may be chosen from soap and non-soap anionic, cationic, nonionic, amphoteric and zwitterionic detergent active compounds, and mixtures thereof.

Many suitable surfactants are available and are fully described in the literature, for example, in "Surface-Active Agents and Detergents", Volumes I and II, by Schwartz, Perry and Berch (published by Interscience).

The preferred surfactants that can be used are soaps and synthetic non-soap anionic and nonionic compounds.

Anionic surfactants are well-known to those skilled in the art. Examples include alkylbenzene sulphonates, particularly linear alkylbenzene sulphonates having an alkyl chain length of C₈-C₁₅; primary and secondary alkylsulphates, particularly C₈-C₁₅ primary alkyl sulphates; alkyl ether sulphates; olefin sulphonates; alkyl xylene sulphonates; dialkyl sulphosuccinates; and fatty acid ester sulphonates. Sodium salts are generally preferred.

Nonionic surfactants that may be used include the primary and secondary alcohol ethoxylates, especially the C₈-C₂₀ aliphatic alcohols ethoxylated with an average of from 1 to 20 moles of ethylene oxide per mole of alcohol, and more especially the C₁₀-C₁₅ primary and secondary aliphatic alcohols ethoxylated with an average of from 1 to 10 moles of ethylene oxide per mole of alcohol. Suitable non-ethoxylated nonionic surfactants include alkylpolyglycosides, glycerol monoethers, and polyhydroxyamides (glucamide).

Cationic surfactants that may be used include quaternary ammonium salts of the general formula R₁R₂R₃R₉N⁺ X⁻ wherein the R groups are independently hydrocarbyl chains of C₁-C₂₂ length, typically alkyl, hydroxyalkyl or ethoxylated alkyl groups, and X is a solubilising cation (for example, compounds in which R₁ is a C₈-C₂₂ alkyl group, preferably a C₈-C₁₀ or C₁₂-C₁₄ alkyl group, R₂ is a methyl group, and R₃ and R₄, which may be the same or different, are methyl or hydroxyethyl groups); and cationic esters (for example, choline esters) and pyridinium salts.

The total quantity of detergent surfactant in the composition is suitably from 0.1 to 60 wt% e.g. 0.5-55 wt%, such as 5-50wt%.

Preferably, the quantity of anionic surfactant (when present) is in the range of from 1 to 50% by weight of the total composition. More preferably, the quantity of anionic surfactant is in the range of from 3 to 35% by weight, e.g. 5 to 30% by weight.

Preferably, the quantity of nonionic surfactant when present is in the range of from 2 to 25% by weight, more preferably from 5 to 20% by weight.

Amphoteric surfactants may also be used, for example amine oxides or betaines.

### Builders:

The compositions may suitably contain from 10 to 70%, preferably from 15 to 70% by weight, of detergency builder. Preferably, the quantity of builder is in the range of from 15 to 50% by weight.

The detergent composition may contain as builder a crystalline aluminosilicate, preferably an alkali metal aluminosilicate, more preferably a sodium aluminosilicate.

The aluminosilicate may generally be incorporated in amounts of from 10 to 70% by weight (anhydrous basis), preferably from 25 to 50%. Aluminosilicates are materials having the general formula:

0.8-1.5 M₂O. Al₂O₃. 0.8-6 SiO₂

where M is a monovalent cation, preferably sodium. These materials contain some bound water and are required to have a calcium ion exchange capacity of at least 50 mg CaO/g. The preferred sodium aluminosilicates contain 1.5-3.5 SiO₂ units in the formula above. They can be prepared readily by reaction between sodium silicate and sodium aluminate, as amply described in the literature.

Alternatively, or additionally to the aluminosilicate builders, phosphate builders may be used.

### Textile Softening and/or Conditioner Compounds:

If the composition of the present invention is in the form of a textile conditioner composition, the surfactant will be a textile softening and/or conditioning compound (hereinafter referred to as "textile softening compound"), which may be a cationic or nonionic compound.

The softening and/or conditioning compounds may be water insoluble quaternary ammonium compounds. The compounds may be present in amounts of up to 8% by weight (based on the total amount of the composition) in which case the compositions are considered dilute, or at levels from 8% to about 50% by weight, in which case the compositions are considered concentrates.

Compositions suitable for delivery during the rinse cycle may also be delivered to the textile in the tumble dryer if used in a suitable form. Thus, another product form is a composition (for example, a paste) suitable for coating onto, and delivery from, a substrate e.g. a flexible sheet or sponge or a suitable dispenser during a tumble dryer cycle.

Suitable cationic textile softening compounds are substantially water-insoluble quaternary ammonium materials comprising a single alkyl or alkenyl long chain having an average chain length greater than or equal to C₂O. More preferably, softening compounds comprise a polar head group and two alkyl or alkenyl chains having an average chain length greater than or equal to C₁₄. Preferably the textile softening compounds have two, long-chain, alkyl or alkenyl chains each having an average chain length greater than or equal to C₁₆.

Most preferably at least 50% of the long chain alkyl or alkenyl groups have a chain length of C₁₈ or above. It is preferred if the long chain alkyl or alkenyl groups of the textile softening compound are predominantly linear.

Quaternary ammonium compounds having two long-chain aliphatic groups, for example, distearyldimethyl ammonium chloride and di(hardened tallow alkyl) dimethyl ammonium chloride, are widely used in commercially available rinse conditioner compositions. Other examples of these cationic compounds are to be found in "Surface-Active Agents and Detergents", Volumes I and II, by Schwartz, Perry and Berch. Any of the conventional types of such compounds may be used in the compositions of the present invention.

The textile softening compounds are preferably compounds that provide excellent softening, and are characterised by a chain melting Lβ to Lα transition temperature greater than 25°C, preferably greater than 35°C, most preferably greater than 45°C. This Lβ to Lα transition can be measured by DSC as defined in "Handbook of Lipid Bilayers", D Marsh, CRC Press, Boca Raton, Florida, 1990 (pages 137 and 337).

Substantially water-insoluble textile softening compounds are defined as textile softening compounds having a solubility of less than 1 x 10⁻³ wt % in demineralised water at 20°C. Preferably the textile softening compounds have a solubility of less than 1 x 10⁻⁴ wt%, more preferably less than 1 x 10⁻⁸ to 1 x 10⁻⁶ wt%.

Especially preferred are cationic textile softening compounds that are water-insoluble quaternary ammonium materials having two C₁₂₋₂₂ alkyl or alkenyl groups connected to the molecule via at least one ester link, preferably two ester links. Di(tallowoxyloxyethyl) dimethyl ammonium chloride and/or its hardened tallow analogue are especially preferred of the compounds of this type. Other preferred materials include 1,2-bis(hardened tallowoyloxy)-3-trimethylammonium propane chloride. Their methods of preparation are, for example, described in US 4 137 180 (Lever Brothers Co). Preferably these materials comprise small amounts of the corresponding monoester as described in US 4 137 180, for example, 1-hardened tallowoyloxy-2-hydroxy-3-trimethylammonium propane chloride.

Other useful cationic softening agents are alkyl pyridinium salts and substituted imidazoline species. Also useful are primary, secondary and tertiary amines and the condensation products of fatty acids with alkylpolyamines.

The compositions may alternatively or additionally contain water-soluble cationic textile softeners, as described in GB 2 039 556B (Unilever).

The compositions may comprise a cationic textile softening compound and an oil, for example as disclosed in EP-A-0829531.

Nonionic softeners include Lβ phase forming sugar esters (as described in M Hato et al Langmuir 12, 1659, 1666, (1996)) and related materials such as glycerol monostearate or sorbitan esters. Often these materials are used in conjunction with cationic materials to assist deposition (see, for example, GB 2 202 244). Silicones are used in a similar way as a co-softener with a cationic softener in rinse treatments (see, for example, GB 1 549 180).

The compositions may also suitably contain a nonionic stabilising agent. Suitable nonionic stabilising agents are linear C₈ to C₂₂ alcohols alkoxylated with 10 to 20 moles of alkylene oxide, C₁₀ to C₂₀ alcohols, or mixtures thereof.

Advantageously the nonionic stabilising agent is a linear C₈ to C₂₂ alcohol alkoxylated with 10 to 20 moles of alkylene oxide. Preferably, the level of nonionic stabiliser is within the range from 0.1 to 10% by weight, more preferably from 0.5 to 5% by weight, most preferably from 1 to 4% by weight. The mole ratio of the quaternary ammonium compound and/or other cationic softening agent to the nonionic stabilising agent is suitably within the range from 40:1 to about 1:1, preferably within the range from 18:1 to about 3:1.

The composition can also contain fatty acids, for example C₈ to C₂₄ alkyl or alkenyl monocarboxylic acids or polymers thereof. Preferably saturated fatty acids are used, in particular, hardened tallow C₁₆ to C₁₈ fatty acids. Preferably the fatty acid is non-saponified, more preferably the fatty acid is free, for example oleic acid, lauric acid or tallow fatty acid. The level of fatty acid material is preferably more than 0.1% by weight, more preferably more than 0.2% by weight. Concentrated compositions may comprise from 0.5 to 20% by weight of fatty acid, more preferably 1% to 10% by weight. The weight ratio of quaternary ammonium material or other cationic softening agent to fatty acid material is preferably from 10:1 to 1:10.

### Other Components

Compositions according to the invention may comprise soil release polymers such as block copolymers of polyethylene oxide and terephthalate.

Other optional ingredients include emulsifiers, electrolytes (for example, sodium chloride or calcium chloride) preferably in the range from 0.01 to 5% by weight, pH buffering agents, and perfumes (preferably from 0.1 to 5% by weight).

Further optional ingredients include non-aqueous solvents " fluorescers, colourants, hydrotropes, antifoaming agents, enzymes, optical brightening agents, and opacifiers.

Suitable bleaches include peroxygen bleaches. Inorganic peroxygen bleaching agents, such as perborates and percarbonates are preferably combined with bleach activators. Where inorganic peroxygen bleaching agents are present the nonanoyloxybenzene sulphonate (NOBS) and tetra-acetyl ethylene diamine (TAED) activators are typical and preferred.

Suitable enzymes include proteases, amylases, lipases, cellulases, peroxidases and mixtures thereof.

In addition, compositions may comprise one or more of anti-shrinking agents, anti-wrinkle agents, anti-spotting agents, germicides, fungicides, anti-oxidants, UV absorbers (sunscreens), heavy metal sequestrants, chlorine scavengers, dye fixatives, anti-corrosion agents, drape imparting agents, antistatic agents and ironing aids. The lists of optional components are not intended to be exhaustive.

Lubricants and other "wrinkle release' agents are a particularly preferred optional component of compositions according to the invention.

In order that the invention may be further and better understood it will be described below with reference to several non-limiting examples.

### Examples:

### Example 1: Preparation of Hydrolysed Amaranth Starch

Hydrolytic treatment of amaranth starch was carried out to improve dispersibility and enhance colloidal properties of the native amaranth starch.

In a Nalgene® container 30 g of food-grade organic amaranth starch (Nu-World Amaranth Inc., Earlville, IA, USA) was mixed with 500 ml of diluted hydrochloric acid, 2.2 N. The whole mixture was shaken vigorously to disperse the starch, and subsequently set in a controlled-temperature bath at 36°C for five hours. The acid-starch mixture was redispersed from time to time by gently shaking the container manually to promote further acid attack on the soluble materials within the starch.

To stop the hydrolytic treatment, an equal volume of distilled water (i.e., 500 ml) was added to the reaction container after the five-hours period. The neutralisation of the starch was carried out by successive steps of redispersion in distilled water followed by centrifugation at 4500 rpm until the pH of the supernatant was over 5. Finally, the neutralised product was dried in a freeze-dryer for a period of 3-5 days. The humidity content of the dried hydrolysed starch prepared in this way was 9.0%.

### Example 2: Preparation of an emulsion

28 g of glycerol monoisostearate (Prisorine™ 2040, Uniquema, Wirral, UK) is thoroughly mixed with 12 g of polydimethylsiloxane PEG isostearate blend (Silwax™ DMC-IS, Siltech, Ontario, Canada). This mix is completely transparent; has a viscosity of 300 mPa.s at room temperature; has an interfacial tension with water of 0.3 mN/m also at room temperature; and under the microscope shows as a single phase.

4 g of amaranth starch treated according to the procedure described in example 1 is dispersed in 1000 ml of distilled water with the aid of a electric mixer (Silverson SL2, Silverson Machines, Chesham, UK). 30 ml of dispersion containing 0.004 g/l of starch is poured in a 50 ml glass vial. 0.5 ml of polyol-in-silicone is added dropwise to the 30 ml amaranth dispersion. During the dropwise addition, the whole content is stirred at ca. 500 rpm with the aid of a universal electronic stirrer (Heidolph RZR 2051, Heidolph Instruments GmbH & Co. KG, Schwabach, Germany).

Once the total oil system is added, the speed of the mixer is increased to ca. 1500 rpm and maintained at this level for 10 min. This same procedure was repeated seven times as to obtain 7 different particle-containing emulsions with 0.5 ml of oil each. All seven containers were then added to the original amaranth dispersion (790 ml) to form a parent emulsion consisting of 1000 ml of water, 4 g of amaranth starch and 3.5 ml of polyol-in-silicone (oil).

Microscopy analysis of the parent emulsion showed individual amaranth colloidal particles freely suspended and not interacting with the emulsified oil droplets. The oil droplets were polydispersed in size and had diameters ranging between 5-10 microns. No interactions between droplets, such as coalescence, was evidenced from the microscopic analysis for up to two weeks after the emulsions were prepared.

### Example 3: Spray Drying of the Emulsion:

Spray-drying of the model polyol-in-silicone/starch particles emulsion was carried out in a laboratory scale spray drier (Lab-plant SD-04, LabPlant Laboratory Equipment, Huddersfield, UK). Standard operating procedures for this equipment are well known to those skilled in the art. Further details can be found in the operation manual of the equipment.

A parent emulsion with the same characteristics as the one described in example 2 was mixed with 50 ml of soluble amylopectin solution (concentration = 4 g/l). A magnetic stirrer was operated at all times to avoid concentration gradients within the parent emulsion/amylopectin mix. The whole mixture was then fed to the top nozzle with the aid of a rotary pump.

The inlet temperature to the top spraying chamber was set in all experiments at 250 ± 1 °C. By controlling the inlet liquid flow rate it was possible to maintain an optimum cyclone outlet temperature in the range 110 ± 1 °C.

Once the equipment reached a steady state operation, off-white powdery material started to form and was discharged out the cyclone into a collection sample bottle.

### Example 4. Matrix/encapsulate Ratio:

Several trials were run according to procedures described in examples 2 and 3. Different ratios of insoluble starch to oil were used. A description of the variables, types of products obtained and their redispersibility characteristics are listed in Table 1.

**Table 1 -**

| **Description of spray-drying variables and product characteristics** | | | | | | |
|---|---|---|---|---|---|---|
| **Sample** | **Solids (%W)** | **Oil (%W)** | **Starch (%W)** | **Powder Quality** | **Redisp** | **Encap. oil (%)** |
| 1 | 0.36 | **48.80** | **51.20** | **++** | **++** | **N/A** |
| 2 | 0.53 | 65.60 | 34.40 | -- | -- | N/A |
| 3 | 0.44 | 58.90 | 41.10 | -- | -- | N/A |
| 4 | 0.40 | 54.40 | 45.60 | -- | -- | N/A |
| **5** | **0.30** | **43.30** | **56.70** | **+** | **+** | **N/A** |
| **6** | **1.30** | **45.50** | **54.50** | **+++** | **+++** | **32.50** |
| **7** | **1.30** | **45.50** | **54.50** | **+++** | +++ | **32.80** |
| **8** | **1.30** | **45.50** | **54.50** | **+++** | **+++** | **37.10** |
| Blank (example 1) | N/A | N/A | N/A | +++ | +++ | 0.90 |

In the table 'solids' is the w/w% total solids (oil + starch) in the emulsion before drying. `Oil' is the w/w% of oil in solids fraction of the parent emulsion (i.e. oil as weight% of oil plus starch). 'Starch' is the w/w% of starch in the solids fraction of the emulsion prior to drying. The 'Oil' and 'Starch' %W add to 100%. Encapsulated oil is measured in triplicate by accelerated solvent extraction (ASE) technique using 0.5g spray dried sample.

For the powder quality the following notation is used:
+ flowing powder yet with big aggregates
++ flowing powder, smaller aggregates
+++ flowing powder, optimum properties
- sticky powder, troublesome spray-drying
-- very sticky powder, unstable spray-drying

### Example 5. Product characterisation:

True density and thermogravimetric behaviour were assessed for the dry emulsion powder containing the encapsulated polyol-in-silicone system.

The true density of the powder was measured by helium pycnometry. The equipment used was a Quantachrome Ultrapycnometer (Quantachrome Instruments, Boyton Beach, Florida, USA); which is designed to measure the volume and true density of solids by using Archimedes' principle of fluid displacement, combined with Boyle's law to determine volume.

Table 2 summarises the true density results. As inferred from the data in the table, there is a strong relationship between the level of encapsulated oil and the true density of the matrix/oil composite.

**Table 2 - True density measurement of dry emulsions**

| **Encapsulated oil level (%)** | **True density (g/cm³)** |
|---|---|
| 0 | 1.542 ± 0.0016 |
| 32.8 | 1.8053 ± 0.2201 |
| 37.1 | 2.115 ± 0.1236 |

Thermogravimetric analysis was carried out in a Perkin Elmer Thermogravimetric Analyser TGA7 (Perkin Elmer, Wellesley, Massachusetts, USA) under the following experimental conditions: sample weight, 10 mg; temperature range, 20 - 400 or; heating rate, 5 °C/min; flowing nitrogen atmosphere.

A typical thermogram for a sample containing 37.1% weight of encapsulated oil shows the presence of two distinct weight-loss events. The first transition, which is due to the release of physically adsorbed water (i.e., moisture) and extents up to about 80°C. Total weight loss in this first transition is typically ca. 9%, a value comparable to the humidity levels found in the hydrolysed starch from example 1.

The second transition typically occurs at a temperature of 180-200 Celsius and corresponds to the thermal decomposition of both encapsulated oil and the matrix. It is clear that the second transition is not a single event, as in the case of the first transition, and therefore it is impossible to distinguish the onset for the degradation of each individual component from the data in the thermogram. However, it is remarkable that the matrix/oil composite remains stable (i.e., no weight loss) when the temperature is raised up to ca. 200°C.

## Claims

1. A dry emulsion comprising less than 20%wt water, at least 50%wt of a particulate, water-insoluble polysaccharide having a mean particle size of less than 3 microns and at least 30%wt of hydrophobic oil, wherein the polysaccharide is amaranth starch.

2. A dry emulsion according to claim 1 comprising:
a) 5-15%wt water,
b) 50-60%wt amaranth starch polysaccharide,
c) 30-40%wt hydrophobic oil.

3. A dry emulsion according to claim 1 or claim 2, wherein the hydrophobic oil is selected from the group comprising, hydrocarbons, silicons oils, lipids, and mixtures thereof.

4. A dry emulsion according to claim 3 wherein the hydrophobic oil comprises a mono- or di-ester of a polyol.

5. A dry emulsions according to claim 3 wherein the hydrophobic oil comprises a glyceride, an ester of a dimethicone copolyol, or a mixture thereof.

6. A dry emulsion according to any preceding claim further comprising a soluble binder.

7. A dry emulsion according to claim 6 wherein the binder is selected from the group comprising a peptide, a sugar and mixtures thereof.

8. A dry emulsion according to claim 2 which comprises:
a) 5-15%wt water,
b) 50-60%wt of amaranth starch polysaccharide having a particle size less than 2 micron, and
c) 30-94 %wt of a glyceride and/or an ester of a silicone polymer.

9. A dry emulsion according to claim 2 where the hydrophobic oil comprises a perfume ingredient.

10. A dry emulsion according to any preceding claim which, at a water content of 9%wt has no glass transition temperature between 100 and 200 Celsius.

11. A method for the manufacture of a dry emulsion according to any one of claims 1-8 which comprises the steps of:
a) providing a dispersion of the insoluble polysaccharide in water,
b) Forming an emulsion of said dispersion and the hydrophobic oil,
c) drying said emulsion to a water level of less than 20% water.

12. A method according to claim 11 wherein step (c) comprises spray drying.

13. A method according to claim 11, wherein step (b) comprises use of a rotary mixer.

14. An emulsion obtainable by dispersion of the emulsion of any one of claims 1-10 in water.

## Patentansprüche

1. Trockenemulsion, die umfasst:
weniger als 20 Gew.-% Wasser, mindestens 50 Gew.-% eines partikelförmigen, wasserunlöslichen Polysaccharids einer mittleren Partikelgröße von weniger als 3 µm und mindestens 30 Gew.-% hydrophobes Öl, wobei das Polysaccharid Amaranthstärke ist.

2. Trockenemulsion nach Anspruch 1, die umfasst:
a) 5 bis 15 Gew.-% Wasser,
b) 50 bis 60 Gew.-% Polysaccharid Amaranthstärke,
c) 30 bis 40 Gew.-% hydrophobes Öl.

3. Trockenemulsion nach Anspruch 1 oder Anspruch 2, wobei das hydrophobe Öl aus der Gruppe ausgewählt ist, die Kohlenwasserstoffe, Siliconöle, Lipide und Gemische davon umfasst.

4. Trockenemulsion nach Anspruch 3, wobei das hydrophobe Öl einen Mono- oder Diester eines Polyols umfasst.

5. Trockenemulsion nach Anspruch 3, wobei das hydrophobe Öl ein Glycerid, einen Ester von Dimethicon-Copolyol oder ein Gemisch davon umfasst.

6. Trockenemulsion nach einem der vorstehenden Ansprüche, die ferner ein lösliches Bindemittel umfasst.

7. Trockenemulsion nach Anspruch 6, wobei das Bindemittel aus der Gruppe ausgewählt ist, die ein Peptid, einen Zucker und Gemische davon umfasst.

8. Trockenemulsion nach Anspruch 2, die umfasst:
a) 5 bis 15 Gew.-% Wasser,
b) 50 bis 60 Gew.-% Polysaccharid Amaranthstärke einer Partikelgröße von weniger als 2 µm und
c) 30 bis 40 Gew.-% eines Glycerids und/oder eines Esters eines Siliconpolymers.

9. Trockenemulsion nach Anspruch 2, wobei das hydrophobe Öl einen Duftstoffbestandteil umfasst.

10. Trockenemulsion nach einem der vorstehenden Ansprüche, die bei einem Wassergehalt von 9 Gew.-% keine Glasübergangstemperatur von 100 bis 200 °C aufweist.

11. Verfahren zum Herstellen einer Trockenemulsion nach einem der Ansprüche 1 bis 8, das die Schritte aufweist:
a) Bereitstellen einer Dispersion des unlöslichen Polysaccharids in Wasser,
b) Erzeugen einer Emulsion von dieser Dispersion und dem hydrophoben Öl,
c) Trocknen der Emulsion bis zu einer Wassermenge von weniger als 20 % Wasser.

12. Verfahren nach Anspruch 11, wobei der Schritt (c) das Sprühtrocknen umfasst.

13. Verfahren nach Anspruch 11, wobei der Schritt (b) die Verwendung eines Rotationsmischers umfasst.

14. Emulsion, erhältlich durch Dispergieren der Emulsion nach einem der Ansprüche 1 bis 10 in Wasser.

## Revendications

1. Émulsion sèche comprenant moins de 20 % en poids d'eau, au moins 50 % en poids d'un polysaccharide particulaire insoluble dans l'eau ayant une taille moyenne des particules de moins de 3 microns et au moins 30 % en poids d'huile hydrophobe, dans laquelle le polysaccharide est un amidon d'amarante.

2. Émulsion sèche selon la revendication 1 comprenant :
a) de 5 à 15 % en poids d'eau,
b) de 50 à 60 % en poids de polysaccharide d'amidon d'amarante,
c) de 30 à 40 % en poids d'huile hydrophobe.

3. Émulsion sèche selon la revendication 1 ou la revendication 2, dans laquelle l'huile hydrophobe est choisie dans le groupe comprenant les hydrocarbures, les huiles de silicone, les lipides et leurs mélanges.

4. Émulsion sèche selon la revendication 3 dans laquelle l'huile hydrophobe comprend un mono- ou di-ester d'un polyol.

5. Émulsion sèche selon la revendication 3 dans laquelle l'huile hydrophobe comprend un glycéride, un ester d'un diméthicone copolyol ou un mélange de ceux-ci.

6. Émulsion sèche selon l'une quelconque des revendications précédentes comprenant en outre un liant soluble.

7. Émulsion sèche selon la revendication 6 dans laquelle le liant est choisi dans le groupe comprenant un peptide, un sucre et leurs mélanges.

8. Émulsion sèche selon la revendication 2 qui comprend :
a) de 5 à 15 % en poids d'eau,
b) de 50 à 60 % en poids de polysaccharide d'amidon d'amarante ayant une taille des particules inférieure à 2 microns, et
c) de 30 à 40 % en poids d'un glycéride et/ou d'un ester d'un polymère de silicone.

9. Émulsion sèche selon la revendication 2 dans laquelle l'huile hydrophobe comprend un ingrédient de parfum.

10. Émulsion sèche selon l'une quelconque des revendications précédentes qui, à une teneur en eau de 9 % en poids, ne présente aucune température de transition vitreuse entre 100 et 200 ° Celsius.

11. Procédé de fabrication d'une émulsion sèche selon l'une quelconque des revendications 1 à 8 qui comprend les étapes consistant à :
a) fournir une dispersion du polysaccharide insoluble dans l'eau,
b) former une émulsion de ladite dispersion et de l'huile hydrophobe,
c) sécher ladite émulsion jusqu'à atteindre une teneur en eau inférieure à 20 %.

12. Procédé selon la revendication 11 dans lequel l'étape (c) comprend un séchage par pulvérisation.

13. Procédé selon la revendication 11 dans lequel l'étape (b) comprend l'utilisation d'un mélangeur rotatif.

14. Émulsion pouvant être obtenue par dispersion de l'émulsion selon l'une quelconque des revendications 1 à 10 dans de l'eau.
